# FASCICULE DE BREVET EUROPEEN

(11) **EP 1 471 749 B1**
(45) Date de publication et mention de la délivrance du brevet: **17.08.2011**
(21) Numéro de dépôt: 04291066.1
(22) Date de dépôt: 23.04.2004
(51) Int. Cl.: H04Q 1/10

(54) **Concentrateur de câblage, unité de distribution des signaux le comportant et coffret comportant cette unité**
Signalverteilungseinheit mit einem Verkabelungskonzentrator und Gehäuse mit dieser Einheit
Signal distribution unit with cabling concentrator and housing comprising this unit

(30) Priorité: 24.04.2003 FR 0305045
(43) Date de publication de la demande: 27.10.2004
(73) Titulaire: Legrand France, 87000 Limoges (FR)
(72) Inventeur: Urbes, Flavien, 38500 Voiron (FR); Feugere, Pierre, 38160 Saint-Verand (FR)
(74) Mandataire: Santarelli

(56) Documents cités:
- EP-A- 0 724 365
- EP-A- 1 069 784
- EP-A- 1 079 491
- WO-A-98/56223
- WO-A-03/003758
- GB-A- 2 317 996
- US-A- 6 028 769

## Description

L'invention a trait aux installations de distribution de signaux dans un bâtiment résidentiel voire tertiaire.

Elle vise à permettre la distribution, de façon simple, commode et économique, des signaux de télévision, de réseau téléphonique et de réseau informatique local (en anglais : Local Area Network).

Le document EP-A-1 069 784 décrit un dispositif de ce type qui permet une redistribution des signaux. Le dispositif ne permet cependant pas d'intégrer d'unités électroniques active.

L'invention propose à cet effet un concentrateur de câblage, caractérisé en ce qu'il comporte :
- une première borne de connexion, adaptée à recevoir un câble de distribution de signaux de télévision ;
- une deuxième borne de connexion, adaptée à recevoir un câble de réseau téléphonique ;
- plusieurs troisièmes bornes de connexion, chacune adaptée à recevoir un câble de réseau informatique local ;
- un premier connecteur, adapté à recevoir une unité électronique active de traitement de signaux de télévision ;
- un deuxième connecteur, adapté à recevoir une unité électronique active de téléphonie ;
- un troisième connecteur, adapté à recevoir une unité électronique active de réseau informatique local ;
- une carte de circuit imprimé à laquelle est raccordée chaque dite première, deuxième et troisième borne de connexion et chaque dit premier, deuxième et troisième connecteur, ladite carte reliant ladite première borne de connexion audit premier connecteur, reliant ladite deuxième borne de connexion audit deuxième connecteur, et reliant chaque dite troisième borne de connexion à chacun desdits premier connecteur, deuxième connecteur et troisième connecteur ; et

un châssis sur lequel est monté ladite carte de circuit imprimé, chaque dite première, deuxième et troisième borne de connexion ainsi que chaque dit premier, deuxième et troisième connecteur, lequel châssis présente un logement pour chaque dite unité électronique active.

On voit que le concentrateur de câblage selon l'invention permet de disposer, sur chacune des troisièmes bornes de connexion, des signaux disponibles sur le premier connecteur, sur le deuxième connecteur et sur le troisième connecteur, lesquels connecteurs disposent respectivement des signaux présents sur la première borne de connexion, sur la deuxième borne de connexion et sur chaque troisième borne de connexion.

Le concentrateur de câblage selon l'invention offre ainsi la possibilité de disposer sur chaque câble reçu dans une troisième borne de connexion, des signaux de différentes natures arrivant au concentrateur de câblage par la première borne de connexion, par la deuxième borne de connexion et par les troisièmes bornes de connexion et traité par les unités électroniques actives prévues pour être reçues respectivement dans le premier connecteur, le deuxième connecteur et le troisième connecteur.

Le fait de prévoir une carte de circuit imprimé pour opérer les différentes liaisons entre les bornes de connexion et les connecteurs permet d'effectuer de façon particulièrement simple, commode et économique la réalisation matérielle de ces liaisons en respectant les impératifs de protection contre l'affaiblissement et/ou la perturbation des signaux.

En outre, le fait de prévoir des connecteurs pour recevoir les unités électroniques actives et le fait de spécialiser chacun de ces connecteurs par type de signal est particulièrement avantageux pour l'installateur et/ou l'utilisateur de l'installation de distribution de signaux à laquelle appartient le concentrateur de câblage, notamment en ce qui concerne la maintenance et/ou l'évolutivité.

Selon des caractéristiques préférées, pour des raisons de simplicité et de commodité de mise en oeuvre :
- lesdites troisièmes bornes de connexion sont disposées en groupe suivant une ligne tandis que chaque dit premier connecteur, deuxième connecteur et troisième connecteur est allongé, avec lesdites troisièmes bornes, ledit premier connecteur, ledit deuxième connecteur et ledit troisième connecteur qui sont disposés en rangées successives ; et éventuellement
- ledit premier connecteur est le plus proche desdites troisièmes bornes de connexion ; et éventuellement
- ledit deuxième connecteur est le plus éloigné desdites troisièmes bornes de connexion avec ledit troisième connecteur qui est disposé entre le premier connecteur et le deuxième connecteur ; et/ou
- ladite première borne de connexion et ladite deuxième borne de connexion sont disposées en groupe suivant une ligne, avec lesdites troisièmes bornes de connexion, ledit premier connecteur, ledit deuxième connecteur, ledit troisième connecteur et le groupe de ladite première borne et de ladite deuxième borne qui sont disposés en rangées successives.

Selon d'autres caractéristiques préférées, pour des questions de simplicité et de commodité de mise en oeuvre :
- lesdites première borne de connexion et deuxième borne de connexion sont disposées à une première extrémité dudit concentrateur ;
- lesdites troisièmes bornes de connexion sont disposées à une deuxième extrémité dudit concentrateur ; et
- ledit premier connecteur, ledit deuxième connecteur et ledit troisième connecteur sont disposés entre ladite première extrémité et ladite deuxième extrémité avec ledit premier connecteur qui est le plus proche de ladite deuxième extrémité.

De préférence, ledit deuxième connecteur est le plus proche de ladite première extrémité tandis que ledit troisième connecteur est disposé entre ledit premier connecteur et ledit deuxième connecteur.

Selon d'autres caractéristiques préférées, pour les possibilités d'utilisation accrues qu'elles offrent et pour des questions de simplicité et de commodité de mise en oeuvre :
- le concentrateur selon l'invention comporte une quatrième borne de connexion, adaptée à recevoir un deuxième câble de distribution de signaux de télévision ; et éventuellement
- ladite carte de circuit imprimé comporte un répartiteur dont une entrée est reliée à ladite première borne de connexion, dont une première sortie, pour des signaux de télévision terrestre, est reliée audit premier connecteur et dont une deuxième sortie, pour la totalité des signaux de télévision, est reliée à ladite quatrième borne de connexion ; et/ou
- le concentrateur selon l'invention comporte une cinquième borne de connexion, adaptée à recevoir un troisième câble de distribution de signaux de télévision ; et éventuellement
- ladite carte de circuit imprimé comporte un coupleur dont une première entrée est reliée à ladite première borne, dont une deuxième entrée est reliée à ladite cinquième borne et dont une sortie est reliée audit premier connecteur ; et/ou
- le concentrateur selon l'invention comporte une quatrième borne de connexion, adaptée à recevoir un deuxième câble de distribution de signaux de télévision et une cinquième borne de connexion, adaptée à recevoir un troisième câble de distribution de signaux de télévision tandis que ladite carte de circuit imprimé comporte un répartiteur-coupleur dont une première entrée est reliée à ladite première borne de connexion, dont une deuxième entrée est reliée à ladite cinquième borne de connexion, dont une première sortie, pour des signaux de télévision terrestre, est reliée audit premier connecteur et dont une deuxième sortie, pour la totalité des signaux de télévision, est reliée à ladite quatrième borne de connexion ; et/ou
- le concentrateur selon l'invention comporte une sixième borne de connexion, adaptée à recevoir un câble de réseau informatique local, avec ladite carte de circuit imprimé qui relie ladite sixième borne de connexion à ladite deuxième borne et audit troisième connecteur ; et/ou
- le concentrateur selon l'invention comporte une septième borne de connexion, adaptée à recevoir un câble de réseau téléphonique, avec ladite carte de circuit imprimé qui relie ladite deuxième borne de connexion à ladite septième borne de connexion ; et/ou
- le concentrateur selon l'invention comporte au moins une borne de connexion autre que ladite première borne de connexion, que ladite deuxième borne de connexion et que ladite troisième borne de connexion, avec ladite première borne de connexion, ladite deuxième borne de connexion et chaque dite autre borne de connexion qui sont disposées en groupe suivant une ligne.

Selon d'autres caractéristiques préférées, pour des raisons de simplicité et de commodité de mise en oeuvre :
- ladite carte de circuit imprimé présente plusieurs couches superposées comportant chacune un substrat diélectrique et des pistes ou des pavés en matériau métallique conducteur disposés sur le substrat ; et éventuellement
- ladite carte de circuit imprimé présente une première dite couche et une deuxième dite couche pour relier ladite première borne de connexion audit premier connecteur ; et éventuellement
- ladite carte de circuit imprimé comporte, pour chaque dite troisième borne, un convertisseur de signal asymétrique en un signal symétrique, avec chaque dit convertisseur qui comporte une entrée reliée audit premier connecteur tant par ladite première couche que par ladite deuxième couche, et qui comporte une sortie reliée à ladite troisième borne de connexion par l'intermédiaire de la seule deuxième couche ; et éventuellement
- chaque dit convertisseur est disposé entre ladite troisième borne de connexion et ledit premier connecteur ; et/ou
- chaque dite borne de connexion et chaque dit connecteur est disposé d'un même côté de ladite carte de circuit imprimé, avec ladite première couche qui en est le plus éloignée et avec ladite deuxième couche qui en est le plus proche ; et/ou
- ladite première couche de ladite carte de circuit imprimé comporte des pistes conductrices pour relier ladite deuxième borne de connexion audit deuxième connecteur et pour relier ledit deuxième connecteur à chacune desdites troisièmes bornes de connexion ; et/ou
- ladite carte de circuit imprimé comporte, entre ladite première couche et ladite deuxième couche, une troisième couche comportant des pistes conductrices pour relier chaque dite troisième borne de connexion audit troisième connecteur ; et éventuellement
- ladite carte de circuit imprimé comporte une quatrième couche comportant d'autres pistes conductrices pour relier chaque dite troisième borne de connexion audit troisième connecteur.

Selon d'autres caractéristiques préférées pour des raisons de simplicité et de commodité de mise en oeuvre :
- ladite première borne de connexion est au format F, ladite deuxième borne de connexion est un bornier à alvéoles de connexion à vis et lesdites troisièmes bornes de connexion sont au format RJ 45 ; et/ou
- chaque dit premier connecteur, deuxième connecteur et troisième connecteur est adapté à loger une portion d'une carte de circuit imprimé.

L'invention vise également, sous un deuxième aspect, une unité de distribution comportant un concentrateur de câblage tel qu'exposé ci-dessus et au moins l'une d'une unité électronique active de traitement de signaux de télévision, d'une unité électronique active de téléphonie et d'une unité électronique active de réseau informatique local disposée dans un dit logement dudit châssis et reçue dans l'un respectif desdits premier connecteur, deuxième connecteur et troisième connecteur.

Selon des caractéristiques préférées pour des question de simplicité et de commodité de mise en oeuvre :
- chaque dite unité électronique active comporte une carte électronique et un boîtier présentant en façade au moins un organe d'affichage et/ou un organe de configuration tandis qu'à l'arrière elle présente une fiche de connexion à l'un desdits premier connecteur, deuxième connecteur et troisième connecteur ; et éventuellement
- chaque dite fiche de connexion fait partie d'une carte de circuit imprimé que comporte ladite carte électronique de ladite unité électronique active.

L'invention vise encore, pour la commodité et la simplicité de mise en oeuvre, notamment dans la gaine technique d'un bâtiment, un coffret pour installation de distribution de signaux, comportant au moins une unité de distribution de signaux tel qu'exposée ci-dessus et une unité d'alimentation en courant continu.

Selon des caractéristiques préférées de ce coffret, pour des raisons de simplicité et de commodité de mise en oeuvre, il comporte également un panneau de brassage et/ou au moins une prise téléphonique de test.

L'exposé de l'invention sera maintenant poursuivi par la description d'un exemple de réalisation, donnée ci-après à titre illustratif et non limitatif, en référence aux dessins annexés. Sur ceux-ci :
- la figure 1 est un schéma d'une installation de distribution de signaux comportant un coffret conforme à l'invention ;
- la figure 2 est un schéma indiquant la nature des signaux présents sur chacune des quatre paires de contacts des prises que comporte cette installation ;
- la figure 3 est une vue en perspective du coffret de distribution de signaux que comporte l'installation illustrée sur la figure 1 ;
- la figure 4 est une autre vue en perspective de ce coffret, où le couvercle de fermeture a été enlevé ;
- la figure 5 est une vue en perspective éclatée de l'unité de distribution de signaux que comporte ce coffret ;
- la figure 6 est une vue en élévation, prise depuis l'avant, du concentrateur de câblage que comporte cette unité de distribution de signaux ;
- La figure 7 est une représentation schématique d'un cordon de brassage utilisé dans le coffret ;
- la figure 8 est une vue latérale en élévation-coupe de l'unité de distribution de signaux ;
- la figure 9 est un schéma de l'unité de distribution de signaux où tant le châssis du concentrateur de câblage que le boîtier de chacune des trois unités électroniques actives n'a pas été représenté, ce schéma montrant d'une façon très générale le trajet des signaux de téléphonie et des signaux de réseau informatique local ; et
- la figure 10 est une vue similaire, mais montrant le trajet des signaux de télévision.

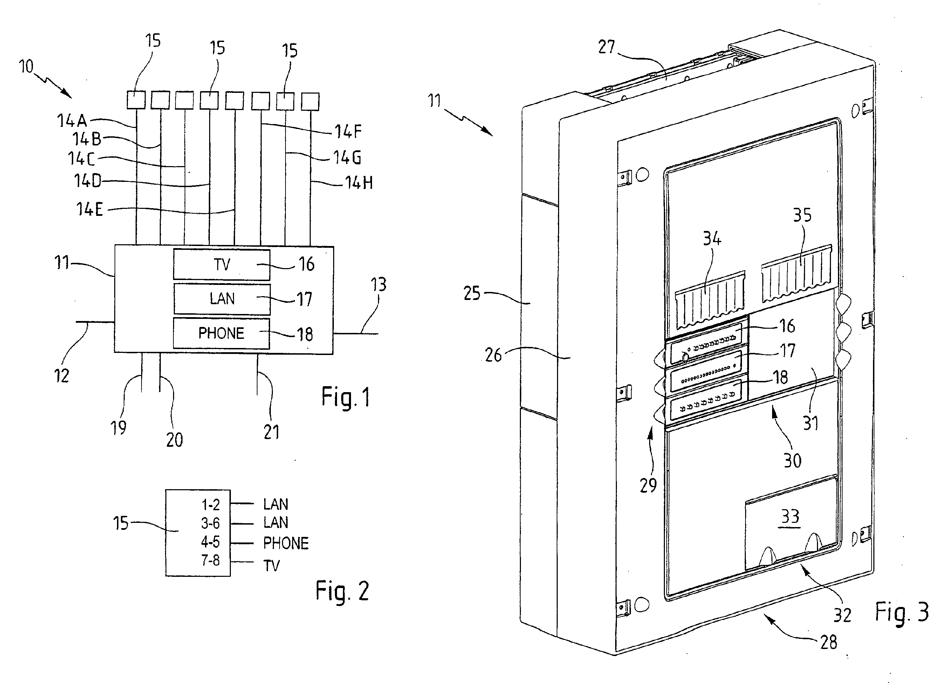

L'installation 10 de distribution de signaux illustrée sur la figure 1 comporte un coffret 11 auquel aboutissent un câble coaxial 12 de distribution de signaux de télévision, un câble 13 de raccordement au réseau téléphonique commuté public et huit câbles 14A à 14H de réseau informatique local.

L'installation 10 fait partie d'un bâtiment résidentiel ou tertiaire, avec ici le coffret 11 qui est disposé dans la gaine technique de ce bâtiment.

Le câble coaxial 12 de distribution des signaux de télévision est relié à un coupleur lui-même relié, d'une part, à une antenne de réception ou à un réseau câblé de distribution des émissions terrestres et, d'autre part, à une antenne de réception des émissions par satellite.

Le câble téléphonique 13 comporte deux paires de conducteurs. II est relié à un central de l'opérateur de téléphonie, lequel fournit une ligne sur chacune des deux paires du câble 13.

Les câbles 14A à 14H de réseau informatique local sont chacun du type conventionnel à quatre paires de conducteurs torsadées, ici en catégorie 6. Ces câbles cheminent chacun, dans le bâtiment auquel appartient l'installation 10, entre le coffret 11 et une prise 15, ici du type RJ 45 de catégorie 6.

Chacun des câbles 14A à 14H est prévu pour distribuer non seulement les signaux de réseau informatique local et les signaux de téléphonie, mais aussi les signaux de télévision.

La figure 2 montre quel est le câblage des prises 15.

On voit que la paire de contacts 1 et 2 est prévue pour les signaux de réseau informatique local LAN, qu'il en va de même pour la paire de contacts 3 et 6, que la paire de contacts 4 et 5 est prévue pour les signaux de téléphonie PHONE et que la paire de contacts 7 et 8 est prévue pour les signaux de télévision TV.

Les contacts pour les signaux de réseau informatique local et de téléphonie étant disposés de façon normalisée, l'utilisateur branche classiquement sur la prise 15 un appareil téléphonique ou un appareil de réseau informatique local, le cas échéant en utilisant un doubleur conventionnel pour brancher deux appareils de réseau informatique local ou pour brancher un tel appareil et un appareil téléphonique.

Pour raccorder un appareil de télévision, un adaptateur est branché sur la prise 15 et un câble coaxial est branché entre l'adaptateur et l'appareil de télévision. En variante, le câble coaxial et l'adaptateur sont réunis dans un même cordon.

Cet adaptateur comporte un convertisseur pour transformer le signal symétrique présent sur la paire de conducteurs torsadée aboutissant aux contacts 7 et 8 de la prise 15 en un signal asymétrique pouvant être véhiculé par le câble coaxial.

Pour que soient présents les signaux de télévision, les signaux de téléphonie et les signaux de réseau informatique local sur les paires de conducteurs torsadées des câbles 14A à 14H, le coffret 11 comporte une unité électronique active 16 de traitement des signaux de télévision, une unité électronique active 17 de réseau informatique local et une unité électronique active 18 de téléphonie, avec le câble 12 qui est relié à l'unité 16, avec le câble 13 qui est relié à l'unité 18 et avec chacun des câbles 14A à 14H qui est relié à chacune des unités 16, 17 et 18.

Les unités électroniques 16, 17 et 18 sont actives en ce sens notamment que leur fonctionnement nécessite une alimentation en énergie électrique.

En outre des câbles 12, 13 et 14A à 14H, il aboutit encore au coffret 11 un câble coaxial 19 de distribution des signaux de télévision, un câble coaxial 20 de raccordement à un modulateur produisant des signaux de télévision terrestre et un câble téléphonique 21.

Les câbles 19 et 20 sont chacun reliés à un répartiteur-coupleur (non illustré) faisant partie d'une carte de circuit imprimé qui, comme on le verra plus loin, appartient à un concentrateur de câblage que comporte le coffret 11. Ce répartiteur-coupleur présente deux entrées reliées respectivement au câble 12 et au câble 20 et deux sorties reliées respectivement à l'unité 16 et au câble 19.

La sortie pour l'unité 16 ne laisse passer que les signaux de télévision terrestre issus du câble 12 et du câble 20. La sortie pour le câble 19 laisse passer la totalité des signaux issus du seul câble 12. Le couplage opéré par le répartiteur-coupleur est unidirectionnel vers l'unité 16 : les signaux issus du câble 20 ne se retrouvent ni sur le câble 12 ni sur le câble 19.

Le câble 19 dessert une prise conventionnelle de distribution des signaux de télévision, présentant une première borne pour les signaux de télévision terrestre et une deuxième borne pour les signaux de télévision par satellite (prise non représentée).

Le câble téléphonique 21 est du même type que le câble 13, c'est-à-dire qu'il comporte deux paires de conducteurs. La liaison entre les câbles 13 et 21 s'effectue par l'intermédiaire de la carte de circuit imprimé susmentionnée : celle-ci relie chacun des quatre conducteurs du câble 13 au connecteur 52 et à la prise 47. Le câble 22 est relié à une prise téléphonique conventionnelle (non représentée) où sont présentes les deux lignes chacune véhiculée par une des paires de conducteurs du câble 13 et du câble 21.

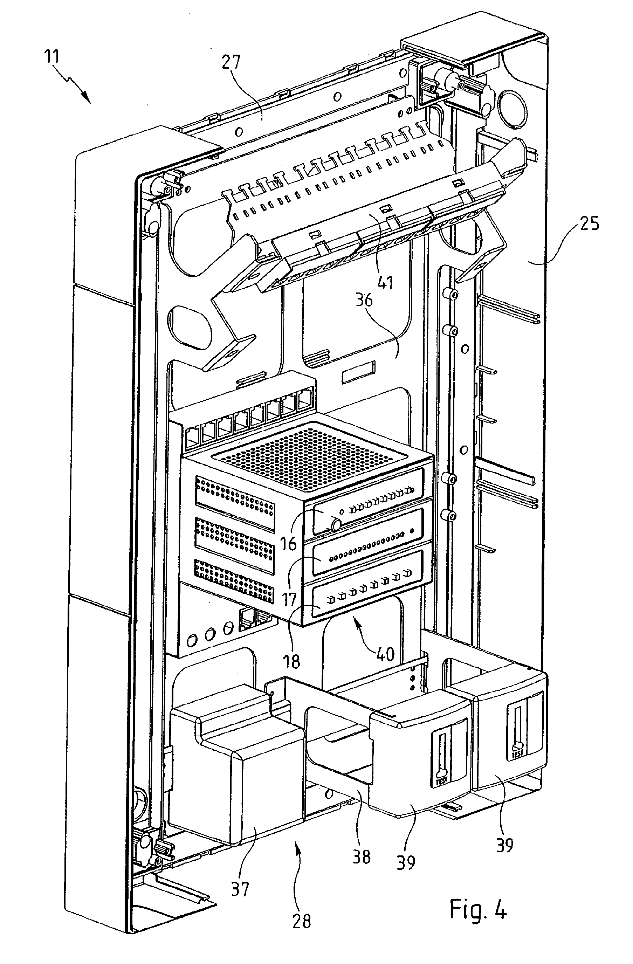

On va maintenant décrire plus en détails le coffret 11 à l'appui des figures 3 et 4.

Comme on le voit sur la figure 3, le coffret 11 comporte un socle 25 et un couvercle 26 formant ensemble une enceinte close dans laquelle est ménagé, sur la face qu'on voit en haut sur la figure 3, un passage 27 pour les câbles 14A à 14H, et dans laquelle est ménagé, sur la face située en bas sur la figure 3, un passage similaire 28 pour les câbles 12, 13 et 19 à 21. En pratique, les passages 27 et 28 sont ménagés dans le socle 25.

La face avant du coffret 11, appartenant au couvercle 26, présente une fenêtre 29 au travers de laquelle apparaît la face avant de chacune des unités 16, 17 et 18. Une fenêtre similaire 30 est disposée à côté de la fenêtre 29 et est ici fermée par un obturateur 31.

La face avant du couvercle 26 présente encore une fenêtre 32 fermée par un volet basculant 33 masquant des prises téléphoniques de test du bon raccordement au réseau téléphonique public (voir ci-après).

Enfin, un porte-étiquette 34, à huit logements, est prévu pour repérer l'emplacement des prises 15 à chacune desquelles aboutit l'un des câbles 14A à 14H. Un porte-étiquette semblable 35 est prévu à côté du porte-étiquette 34.

D'une façon générale le coffret 11 est prévu pour accueillir, si on le désire, en outre de l'unité de distribution de signaux comportant les unités électroniques actives 16, 17 et 18, une deuxième unité de distribution similaire. Dans ce cas, l'obturateur 31 est enlevé pour laisser apparaître les faces avant des unités électroniques actives de la deuxième unité de distribution de signaux tandis que le porte-étiquette 35 est utilisé pour repérer l'emplacement auquel aboutissent les huit câbles de réseau informatique local supplémentaires reliés à la deuxième unité de distribution de signaux.

Comme on le voit sur la figure 4, le coffret 11 comporte un châssis métallique 36 solidaire du socle 25.

Sur le châssis 36 sont montés une unité 37 d'alimentation en courant continu, un support 38 pour des prises téléphoniques de test 39, une unité de distribution de signaux 40 et un panneau de brassage 41 présentant des prises au format RJ 45 en catégorie 6.

Le châssis 36 est prévu pour recevoir, si on le désire, afin d'effectuer une extension de l'installation 10, une deuxième unité de distribution de signaux telle que 40 et un deuxième panneau de brassage tel que 41. L'emplacement de réception de la deuxième unité de distribution de signaux est visible sur la figure 4 à droite de l'unité 40 tandis que l'emplacement pour le deuxième panneau de brassage est visible sur la figure 4 en-dessous du panneau 41.

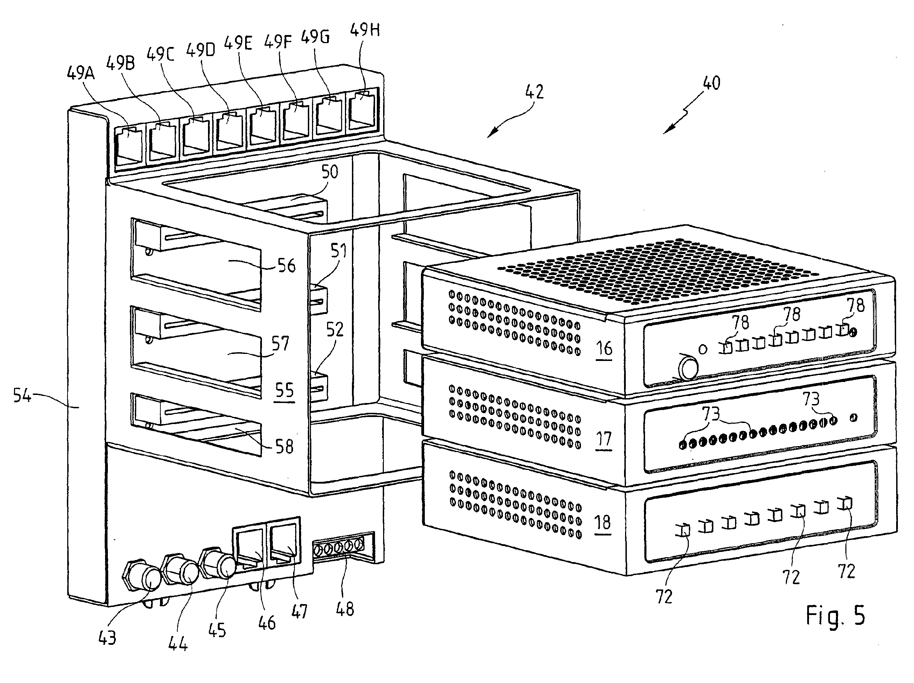

On va maintenant décrire l'unité 40 à l'appui des figures 5 à 6 et 8 à 10.

L'unité 40 comporte les unités électroniques actives 16, 17 et 18 et un concentrateur de câblage 42.

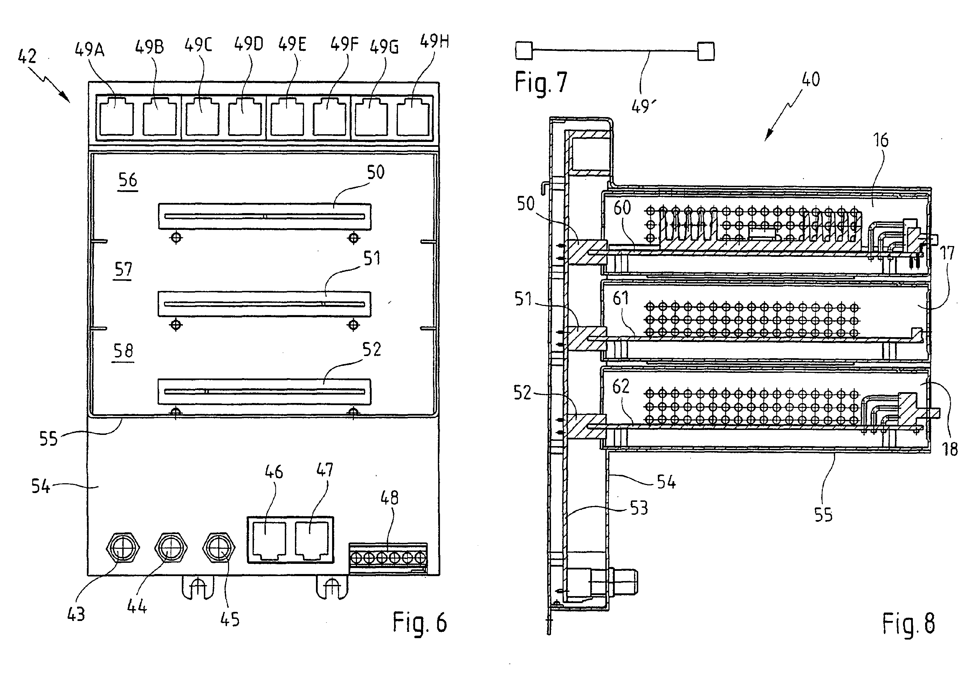

Le concentrateur 42 comporte en partie basse trois fiches F 43, 44 et 45, deux prises 46 et 47 au format RJ 45 en catégorie 6 et un bornier 48 à six alvéoles de raccordement à vis (voir la figure 6).

Les fiches 43 à 45 reçoivent respectivement le câble coaxial 12, le coaxial 19 et le câble coaxial 20.

La prise 46 reçoit, si on le désire, un câble de réseau informatique du type cordon de brassage pour mettre en cascade l'unité 40 avec une autre unité 40 pour ce qui concerne les signaux de téléphonie et les signaux de réseau informatique local : le câblage des contacts de la prise 46 est similaire à celui des prises 15 si ce n'est que la paire de contacts 7 et 8 est prévue pour des signaux de téléphonie (et non de télévision). La carte de circuit imprimé présente dans le concentrateur 42 relie les contacts 1, 2, 3 et 6 à l'unité électronique 17 et chacun des contacts 4, 5, 7 et 8 à un conducteur respectif du câble 13.

Pour mettre en cascade l'unité 40 avec une unité similaire en ce qui concerne les signaux de télévision, la fiche 44 de celle de deux unités 40 qui reçoit le câble 12 est branchée à une extrémité d'un câble coaxial dont l'autre extrémité est branchée à la fiche 43 de l'autre unité 40 tandis que le câble 19 est branché sur la fiche 44 de cette autre unité.

La prise 47 reçoit le câble téléphonique 21.

Le bornier 48, dans quatre de ses alvéoles de connexion à vis, reçoit les conducteurs du câble téléphonique 13. Les deux autres alvéoles de connexion à vis du bornier 48 reçoivent un câble d'alimentation en courant continu connecté à l'unité 37.

Entre le passage 28 et le bornier 48, le câble téléphonique 13 transite par les prises 39.

En partie haute, le concentrateur 42 présente huit prises 49A à 49H au format RJ 45, ici en catégorie 6.

Les prises 49A à 49H reçoivent chacune l'extrémité d'un cordon de brassage 49' (figure 7) dont l'autre extrémité est reçue dans l'une des prises du panneau 41. Chacun des câbles 14A à 14H est connecté à l'une des prises du panneau de brassage 41. Ainsi, chacun des câbles 14A à 14H est relié à l'une des prises 49A à 49H par l'intermédiaire du panneau de brassage 41 et d'un cordon de brassage 49'.

Le concentrateur 42 présente encore trois connecteurs 50, 51 et 52 recevant chacun une fiche de connexion respectivement de l'unité 16, de l'unité 17 et de l'unité 18, ainsi qu'on le voit plus particulièrement sur la figure 8.

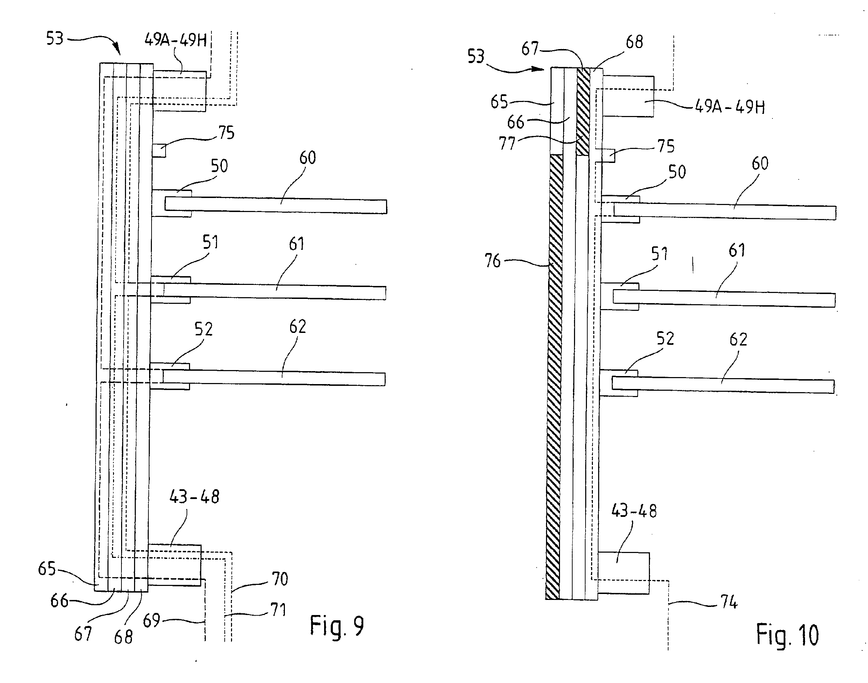

Les fiches F 43 à 45, les prises 46 et 47 au format RJ 45, le bornier 48, les prises 49A à 49H et les connecteurs 50 à 52 sont chacun raccordés à une carte de circuit imprimé 53, laquelle effectue les différentes liaisons requises, sur lesquelles on reviendra ultérieurement à l'appui notamment des figures 9 et 10.

Les fiches, prises, bornier et connecteurs qui sont raccordés à la carte 53, ainsi que cette dernière, sont montés sur un châssis métallique 54 qui enveloppe la carte 53 et qui est muni d'un nez saillant 55 annulaire à section rectangulaire entourant les connecteurs 50 à 52. Le nez 55 forme trois logements 56, 57 et 58 pour recevoir respectivement l'unité 16, l'unité 17 et l'unité 18.

Chacune de ces unités comporte un boîtier métallique à l'intérieur duquel est disposé une carte électronique, respectivement 60, 61 et 62 (figures 8).

Des trous d'aération sont prévus dans chacun des boîtiers des unités 16, 17 et 18 et des fenêtres correspondantes sont prévues sur le nez 55.

La carte électronique de chacune des unités 16, 17 et 18 comporte des voyants et/ou boutons-poussoirs qui sont visibles et/ou accessibles sur la face avant des unités 16, 17 et 18.

L'extrémité arrière de la carte de circuit imprimé que comporte la carte électronique de chacune des unités 16, 17 et 18 forme une fiche qui est reçue dans le connecteur 50, 51 ou 52 correspondant.

Comme indiqué ci-dessus, la carte de circuit imprimé 53 sert à relier la fiche 43 à l'unité électronique active 16, à relier les deux paires téléphoniques branchées sur le bornier 48 à l'unité électronique active 18 et à relier chacune des prises 46 et 49A à 49H à l'unité électronique active 17 et chacune des prises 49A à 49H aux unités électroniques actives 16 et 18.

En outre, la carte 53 relie les deux alvéoles du bornier 48 branchées au câble d'alimentation en courant continu à chacune des unités 16, 17 et 18 et effectue les liaisons susmentionnées entre le bornier 48 et les prises 46 et 47 ainsi qu'entre la fiche 43 et les fiches 44 et 45.

Comme illustré très schématiquement sur les figures 9 et 10, la carte 53 présente quatre couches superposées 65 à 68 comportant chacune un substrat diélectrique et des pistes ou des pavés en matériau métallique conducteur disposés sur le substrat.

Sur la figure 9, le trajet général des signaux téléphoniques est représenté par la ligne 69 en trait interrompu long, le trajet des signaux de réseau informatique local correspondant à l'une des paires de conducteurs torsadées est représenté par la ligne 70 en trait interrompu court tandis que le trajet des signaux correspondant à l'autre paire est représenté par la ligne 71 en trait mixte.

On voit que le trajet 69 des signaux téléphoniques passe essentiellement dans la couche 65, qui est la plus à l'arrière, c'est-à-dire celle qui est le plus éloignée des fiches, prises, bornier et connecteurs 43 à 48, 49A à 49H et 50 à 52.

Des vias servent à faire transiter ces signaux au travers des autres couches, respectivement, de l'arrière vers l'avant, 66, 67 et 68, au niveau du bornier 48 et des prises 46 et 47, au niveau du connecteur 52 et au niveau des prises 49A à 49H.

Les signaux de réseau informatique local dont le trajet est matérialisé par les lignes 71 et 70 empruntent pour l'essentiel respectivement la couche intermédiaire 66 et la couche intermédiaire 67. Des vias pratiqués pour la transition de ces signaux au travers de la couche 68 et éventuellement de la couche 67 sont prévus au niveau de la prise 46, au niveau du connecteur 51 et au niveau des prises 49A à 49H.

En pratique, chacun des trajets matérialisés par les lignes 69, 71 et 70 correspond sur les couches 65, 66 et 67 à une piste pour chaque conducteur des câbles correspondant, soit :
- dans la couche 65, pour le trajet matérialisé par la ligne 69, quatre pistes correspondant chacune à l'une des alvéoles de raccordement à vis du bornier 48 entre ce dernier et le connecteur 52 tandis qu'entre le connecteur 52 et chacune des prises 49A à 49H, il y a deux pistes correspondant à la paire de contacts 4 et 5 de cette prise;
- dans chacune des couches 66 et 67, pour les trajets matérialisés respectivement par la ligne 71 et par la ligne 70, deux pistes correspondant respectivement à la paire de contacts 1 et 2 et à la paire de contacts 3 et 6 de la prise 46 entre cette dernière et le connecteur 51 et de même entre le connecteur 51 et chacune des prises 49A à 49H.

Dans l'exemple illustré, l'unité électronique active 18 sert, pour chacune des prises 49A à 49H, grâce aux boutons-poussoirs 72 qu'elle comporte en façade, au nombre de huit, à sélectionner celle des deux lignes fournies par le câble 13 qui sera présente sur la paire de contacts 4 et 5 de la prise 49A à 49H correspondante, et donc sur la paire de contacts 4 et 5 de la prise 15 à laquelle abouti le câble 14A à 14H correspondant.

Toujours dans l'exemple illustré, l'unité électronique 17 est un répéteur multiport pour réseau informatique local, et plus précisément ici un Switch ETHERNET 10/100 base T.

Les voyants 73 situés en façade de l'unité 17 servent à donner une indication d'état pour chacune des deux paires de contacts concernés (paire 1 et 2 ainsi que paire 3 et 6) de chacune des prises 49A à 49H.

Le trajet des signaux de télévision est quant à lui montré sur la figure 10 où il est matérialisé par la ligne en trait interrompu court 74.

On notera tout d'abord qu'il est prévu sur la carte 53 huit convertisseurs 75 de signaux asymétriques tels que ceux se propageant sur un câble coaxial, en signaux symétriques, tels que ceux se propageant sur une paire de conducteurs torsadée.

L'entrée (signal asymétrique) de chaque convertisseur 75 est connectée, d'une part, à une piste appartenant à la couche avant 68 et, d'autre part, au pavé conducteur 76 appartenant à la couche 65 tandis que la sortie de chaque convertisseur 75 (signal symétrique) est reliée à deux pistes appartenant à la couche 68.

Entre la fiche 43 et l'entrée du répartiteur-coupleur susmentionné (non illustré) dont est pourvu la carte 53, ainsi qu'entre l'une des sorties de ce répartiteur et le connecteur 50, les signaux de télévision se propagent dans la carte 53 grâce à une piste appartenant à la couche 68 et grâce au pavé 76, lequel constitue par ailleurs un plan de masse.

Entre le connecteur 50 et chacun des convertisseurs 75, les signaux de télévision se propagent dans la carte 53 grâce à une piste appartenant à la couche 68 et grâce au pavé 76.

Entre chaque convertisseur 75 et la prise 49A à 49H correspondante, les signaux de télévision, qui sont alors sous forme symétrique, se propagent dans la carte 53 grâce à deux pistes appartenant à la couche 68.

En regard des différentes pistes conductrices de la couche 68 servant à acheminer les signaux de télévision sous forme symétrique, la couche 67 présente un pavé conducteur 77 qui ne sert pas directement à la propagation du signal, mais produit un plan de masse utile à l'adaptation d'impédance et à la compatibilité électromagnétique, en particulier en matière de protection contre la diaphonie.

Bien entendu, les régions de la carte 53 où s'effectue la propagation des signaux de téléphonie et des signaux de réseau informatique local, de la façon illustrée sur la figure 9, et les régions où se produit la propagation des signaux de télévision, de la façon illustrée sur la figure 10, sont distinctes.

Plus généralement, les couches 66 et 67 ne comportent aucune piste conductrice entre le pavé 76 et les pistes conductrices de la couche 68 servant à la propagation des signaux de télévision.

L'unité électronique active 16 est un amplificateur-répartiteur de signaux de télévision asymétriques.

Elle comporte en particulier un amplificateur puis un répartiteur vers chacune des huit voies de sortie vers l'une des prises 49A à 49H et, pour chacune de ces voies, un bouton-poussoir 78, situé sur la face avant, servant à sélectionner si l'on alimente ou non la prise 49A à 49H correspondante en signaux de télévision.

On observera que le connecteur 50 recevant l'unité électronique active 16 est celui qui est le plus proche des prises 49A à 49H et qu'en conséquence la longueur du trajet dans la carte 53 des signaux de télévision sortant de l'unité 16 est minimisée, ce qui est favorable à la prévention de l'affaiblissement et de la perturbation de ces signaux dans la carte 53.

On observera, de même, que les convertisseurs 75 sont situés au plus près des prises 49A à 49H, de sorte que le trajet dans la carte 53 des signaux de télévision sous forme symétrique est minimisé, ce qui est favorable à la prévention des perturbations de ce signal, qui est très sensible, vu les fréquences en jeu (jusqu'à 862 MHz).

Le connecteur 52 recevant l'unité électronique active de téléphonie 18 est le plus éloigné des prises 49A à 49H de sorte que le trajet des signaux de téléphonie entre l'unité 18 et la prise 49A à 49H est relativement long. De plus, c'est dans la couche 65, située le plus en arrière, que ces signaux se propagent.

Cela ne présente en pratique pas d'inconvénients, les signaux téléphoniques étant relativement robustes.

Enfin, le connecteur 51 est situé en position intermédiaire entre les connecteurs 50 et 52, de même d'ailleurs que ce sont les couches intermédiaires 66 et 67 de la carte 53 qui servent à la propagation des signaux de réseau informatique local. Cela est compatible avec la sensibilité des signaux de réseau informatique local, qui est intermédiaire entre celle des signaux de téléphonie et celle des signaux de télévision.

L'agencement respectivement des prises 49A à 49H, du connecteur 50, du connecteur 51, du connecteur 52, des fiches 43 à 45, des prises 46 et 47 et du bornier 48 en cinq rangées successives ; la spécialisation des connecteurs 50, 51 et 52 par type de signaux à traiter et le choix de leur éloignement aux deux rangées extrêmes ainsi que la spécialisation des différentes couches de la carte 53 par type de signaux à propager, permet de concilier de façon particulièrement simple, commode et économique la réalisation matérielle des différentes liaisons à établir et les impératifs notamment d'adaptation d'impédance et de compatibilité électromagnétique pour éviter les affaiblissements et les perturbations des signaux en jeu.

L'agencement de l'unité de distribution de signaux 40, avec la carte 53 qui est disposée debout tandis que les unités électroniques actives 16, 17 et 18 sont disposés couchées, est particulièrement favorable sur le plan de l'encombrement et sur le plan de l'accessibilité.

La disposition des organes d'affichage (tels que les voyants 73 de l'unité 17) ou des organes de configuration (tels que les boutons-poussoirs 72 ou 78) en face avant des unités électroniques actives est également particulièrement avantageuse en matière d'accessibilité, étant au surplus observé que cette accessibilité est conservée même lorsque le couvercle 26 est en place sur le socle 25, grâce à la fenêtre 29.

D'une façon générale, le concentrateur de câblage 42 comporte uniquement des organes passifs. L'ensemble des éléments actifs de l'unité de distribution de signaux 40 fait partie de l'unité 16, de l'unité 17 ou de l'unité 18.

La spécialisation par type de signaux de chacune de ces trois unités est également avantageuse par la modularité qu'elle offre.

Ainsi, si on le désire, il est possible de n'utiliser dans un premier temps qu'une seule des unités 16 à 18 puis de faire évoluer l'installation de distribution de signaux en rajoutant les unités actives manquantes.

Il est bien entendu possible d'utiliser l'unité 40 ailleurs que dans un coffret tel que le coffret 11 et/ou avec une orientation différente, par exemple avec les prises 49A à 49H en bas plutôt qu'en haut.

Dans une variante non illustrée le câble 13 est relié à un réseau téléphonique privé plutôt que public et/ou à un réseau téléphonique numérique plutôt que commuté.

Dans d'autres variantes non illustrées, le nombre et la disposition ainsi que la nature des bornes de connexion que constituent les fiches 43 à 45, le bornier 48 et les prises 46, 47 et 49A à 49H est différent, par exemple une ou plusieurs des fiches 44 et 45 ainsi que des prises 46 et 47 sont supprimées ; les prises 49A à 49H sont d'un format différent que RJ 45 et/ou sont en nombre différent de huit ; et/ou les connecteurs 50, 51 et 52 présentent un format où sont agencés différemment, par exemple autrement qu'en rangées parallèles aux bornes de connexion.

Dans encore d'autres variantes non illustrées, la carte de circuit imprimé 53 est remplacée par une carte agencée différemment, et notamment par une carte ayant un nombre de couches différent de quatre.

Dans encore d'autres variantes non illustrées, les unités électroniques actives 16, 17 et 18 sont remplacées par des unités traitant le même type des signaux mais de nature différente, par exemple l'unité 17 formée ici par un Switch ETHERNET est remplacée par un autre type de répéteur multiport pour réseau informatique local.

Dans encore d'autres variantes non représentées, l'unité de distribution de signaux telle que 40 constitue un appareil autonome, muni de sa propre alimentation.

De nombres autres variantes sont possibles en fonction des circonstances et, on rappelle à cet égard que l'invention ne se limite pas aux exemples décrits et représentés.

## Revendications

1. Concentrateur de câblage, comprenant :
- une première borne de connexion (43), adaptée à recevoir un câble (12) de distribution de signaux de télévision ;
- une deuxième borne de connexion (48), adaptée à recevoir un câble (13) de réseau téléphonique ;
- plusieurs troisièmes bornes de connexion (49A - 49H), chacune adaptée à recevoir un câble (49') de réseau informatique local ;
**caractérisé en ce qu'**il comporte :
- un premier connecteur (50), adapté à recevoir une unité électronique active (16) de traitement de signaux de télévision ;
- un deuxième connecteur (52), adapté à recevoir une unité électronique active (18) de téléphonie ;
- un troisième connecteur (51), adapté à recevoir une unité électronique active (17) de réseau informatique local ;
- une carte de circuit imprimé (53) à laquelle est raccordée chaque dite première, deuxième et troisième borne de connexion (43, 48, 49A - 49H) et chaque dit premier, deuxième et troisième connecteur (50, 51, 52), ladite carte (53) reliant ladite première borne de connexion (43) audit premier connecteur (50), reliant ladite deuxième borne de connexion (48) audit deuxième connecteur (52), et reliant chaque dite troisième borne de connexion (49A - 49H) à chacun desdits premier connecteur (50), deuxième connecteur (52) et troisième connecteur (51) ; et
- un châssis (54) sur lequel est monté ladite carte de circuit imprimé (53), chaque dite première, deuxième et troisième borne de connexion (43, 48, 49A - 49H) ainsi que chaque dit premier, deuxième et troisième connecteur (50, 51, 52), lequel châssis présente un logement (56, 57, 58) pour chaque dite unité électronique active (16, 17, 18),

2. Concentrateur selon la revendication 1, **caractérisé en ce que** lesdites troisièmes bornes de connexion (49A - 49H) sont disposées en groupe suivant une ligne tandis que chaque dit premier connecteur (50), deuxième connecteur (52) et troisième connecteur (51) est allongé, avec lesdites troisièmes bornes (49A - 49H), ledit premier connecteur (50), ledit deuxième connecteur (52) et ledit troisième connecteur (51) qui sont disposés en rangées successives.

3. Concentrateur selon la revendication 2, **caractérisé en ce que** ledit premier connecteur (50) est le plus proche desdites troisièmes bornes de connexion (49A - 49H).

4. Concentrateur selon la revendication 3, **caractérisé en ce que** ledit deuxième connecteur (52) est le plus éloigné desdites troisièmes bornes de connexion (49A - 49H) avec ledit troisième connecteur (51) qui est disposé entre le premier connecteur (50) et le deuxième connecteur (52).

5. Concentrateur selon l'une quelconque des revendications 2 à 4, **caractérisé en ce que** ladite première borne de connexion (43) et ladite deuxième borne de connexion (48) sont disposées en groupe suivant une ligne, avec lesdites troisièmes bornes de connexion (49A - 49H), ledit premier connecteur (50), ledit deuxième connecteur (52), ledit troisième connecteur (51) et le groupe de ladite première borne (43) et de ladite deuxième borne (48) qui sont disposés en rangées successives.

6. Concentrateur selon l'une quelconque des revendications 1 à 5, **caractérisé en ce que** :
- lesdites première borne de connexion (43) et deuxième borne de connexion (48) sont disposées à une première extrémité dudit concentrateur (42) ;
- lesdites troisièmes bornes de connexion (49A-49H) sont disposées à une deuxième extrémité dudit concentrateur (42) ; et
- ledit premier connecteur (50), ledit deuxième connecteur (52) et ledit troisième connecteur (51) sont disposés entre ladite première extrémité et ladite deuxième extrémité avec ledit premier connecteur (50) qui est le plus proche de ladite deuxième extrémité.

7. Concentrateur selon la revendication 6, **caractérisé en ce que** ledit deuxième connecteur (52) est le plus proche de ladite première extrémité tandis que ledit troisième connecteur (51) est disposé entre ledit premier connecteur (50) et ledit deuxième connecteur (52).

8. Concentrateur selon l'une quelconque des revendications 1 à 7, **caractérisé en ce qu'**il comporte une quatrième borne de connexion (44), adaptée à recevoir un deuxième câble (19) de distribution de signaux de télévision.

9. Concentrateur selon la revendication 8, **caractérisé en ce que** ladite carte de circuit imprimé (53) comporte un répartiteur dont une entrée est reliée à ladite première borne de connexion (43), dont une première sortie, pour des signaux de télévision terrestre, est reliée audit premier connecteur (50) et dont une deuxième sortie, pour la totalité des signaux de télévision, est reliée à ladite quatrième borne de connexion (44).

10. Concentrateur selon l'une quelconque des revendications 1 à 9, **caractérisé en ce qu'**il comporte une cinquième borne de connexion (45), adaptée à recevoir un troisième câble (20) de distribution de signaux de télévision.

11. Concentrateur selon la revendication 10, **caractérisé en ce que** ladite carte de circuit imprimé (53) comporte un coupleur dont une première entrée est reliée à ladite première borne (43), dont une deuxième entrée est reliée à ladite cinquième borne (45) et dont une sortie est reliée audit connecteur (50).

12. Concentrateur selon l'une quelconque des revendications 1 à 11, **caractérisé en ce qu'**il comporte une quatrième borne de connexion (44), adaptée à recevoir un deuxième câble (19) de distribution de signaux de télévision et une cinquième borne de connexion (45), adaptée à recevoir un troisième câble (20) de distribution de signaux de télévision tandis que ladite carte de circuit imprimé (53) comporte un répartiteur-coupleur dont une première entrée est reliée à ladite première borne de connexion (43), dont une deuxième entrée est reliée à ladite cinquième borne de connexion (45), dont une première sortie, pour des signaux de télévision terrestre, est reliée audit premier connecteur (50) et dont une deuxième sortie, pour la totalité des signaux de télévision, est reliée à ladite quatrième borne de connexion (44).

13. Concentrateur selon l'une quelconque des revendications 1 à 12, **caractérisé en ce qu'**il comporte une sixième borne de connexion (46), adaptée à recevoir un câble (21) de réseau informatique local, avec ladite carte de circuit imprimé qui relie ladite sixième borne de connexion (46) à ladite deuxième borne (48) et audit troisième connecteur (51).

14. Concentrateur selon l'une quelconque des revendications 1 à 13, **caractérisé en ce qu'**il comporte une septième borne de connexion (47), adaptée à recevoir un câble (21) de réseau téléphonique, avec ladite carte de circuit imprimé (53) qui relie ladite deuxième borne de connexion (48) à ladite septième borne de connexion (47).

15. Concentrateur selon l'une quelconque des revendications 1 à 14, **caractérisé en ce qu'**il comporte au moins une borne de connexion (44-47) autre que ladite première borne de connexion (43), que ladite deuxième borne de connexion (48) et que ladite troisième borne de connexion (49A - 49H), avec ladite première borne de connexion (43), ladite deuxième borne de connexion (48) et chaque dite autre borne de connexion (44-47) qui sont disposées en groupe suivant une ligne.

16. Concentrateur selon l'une quelconque des revendications 1 à 15, **caractérisé en ce que** ladite carte de circuit imprimé (53) présente plusieurs couches superposées (65-68) comportant chacune un substrat diélectrique et des pistes ou des pavés (76, 77) en matériau métallique conducteur disposés sur le substrat.

17. Concentrateur selon la revendication 16, **caractérisé en ce que** ladite carte de circuit imprimé (53) présente une première dite couche (65) et une deuxième dite couche (68) pour relier ladite première borne de connexion (43) audit premier connecteur (50).

18. Concentrateur selon la revendication 17, **caractérisé en ce que** ladite carte de circuit imprimé (53) comporte, pour chaque dite troisième borne (49A - 49H), un convertisseur (75) de signal asymétrique en un signal symétrique, avec chaque dit convertisseur (75) qui comporte une entrée reliée audit premier connecteur (50) tant par ladite première couche (65) que par ladite deuxième couche (68), et qui comporte une sortie reliée à ladite troisième borne de connexion (49A - 49H) par l'intermédiaire de la seule deuxième couche (68).

## Claims

1. A wiring concentrator comprising:
- a first connection terminal (43), adapted to receive a television signal distribution cable (12);
- a second connection terminal (48), adapted to receive a telephone network cable (13);
- a plurality of third connection terminals (49A-49H), each adapted to receive a local area network cable (49');
**characterized in that** it comprises:
- a first connector (50), adapted to receive an active electronic unit (16) for processing television signals;
- a second connector (52), adapted to receive an active electronic telephonic unit (18);
- a third connector (51), adapted to receive an active electronic local area network unit (17) ;
- a printed circuit board (53) to which each of said first, second and third connection terminals (43, 48, 49A - 49H) and each of said first, second and third connectors (50, 51, 52), are connected, said printed circuit board (53) connecting said first connection terminal (43) to said first connector (50), said second connection terminal (48) to said second connector (52), and each of said third connection terminals (49A - 49H), to each of said first (50), second (52), and third (51) connectors; and
- a chassis (54) on which said printed circuit board (53), each of said first, second and third connection terminals (43, 48, 49A - 49H), and each of said first, second and third connectors (50, 51, 52) are mounted, which chassis includes a housing (56, 57, 58) for each said active electronic unit (16, 17, 18).

2. The concentrator claimed in claim 1 **characterized in that** said third connection terminals (49A - 49H), are grouped in a line while each of said first connector (50), second connector (52), and third connector (51) is elongate, and said third terminals (49A - 49H), said first connector (50), said second connector (52), and said third connector (51) are disposed in successive rows.

3. The concentrator claimed in claim 2, **characterized in that** said first connector (50) is the nearest to said third connection terminals (49A-49H).

4. The concentrator claimed in claim 3, **characterized in that** said second connector (52) is the farthest from said third connection terminals (49A - 49H) and said third connector (51) is disposed between said first connector (50) and said second connector (52).

5. The concentrator claimed in any one of claims 2 to 4, **characterized in that** said first connection terminal (43) and said second connection terminal (48) are grouped in a line and said third connection terminals (49A - 49H), said first connector (50), said second connector (52), said third connector (51), and the group comprising said first terminal (43) and said second terminal (48) are disposed in successive rows.

6. The concentrator claimed in any one of claims 1 to 5, **characterized in that**:
- said first connection terminal (43) and said second connection terminal (48) are disposed at a first end of said concentrator (42);
- said third connection terminals (49A - 49H) are disposed at a second end of said concentrator (42); and
- said first connector (50), said second connector (52) and said third connector (51) are disposed between said first end and said second end, and said first connector (50) is the nearest to said second end.

7. The concentrator claimed in claim 6, **characterized in that** said second connector (52) is the nearest to said first end while said third connector (51) is disposed between said first connector (50) and said second connector (52).

8. The concentrator claimed in any one of claims 1 to 7, **characterized in that** it comprises a fourth connection terminal (44), adapted to receive a second television signal distribution cable (19).

9. The concentrator claimed in claim 8 **characterized in that** said printed circuit board (53) comprises a distributor of which an input is connected to said first connection terminal (43), of which a first output for terrestrial television signals is connected to said first connector (50) and of which a second output for all television signals is connected to said fourth connection terminal (44).

10. The concentrator claimed in any one of claims 1 to 9, **characterized in that** it comprises a fifth connection terminal (45), adapted to receive a third television signal distribution cable (20).

11. The concentrator claimed in claim 10 **characterized in that** said printed circuit board (53) comprises a coupler of which a first input is connected to said first terminal (43), of which a second input is connected to said fifth terminal (45) and of which an output is connected to said connector (50).

12. The concentrator claimed in any one of claims 1 to 11, **characterized in that** it comprises a fourth connection terminal (44), adapted to receive a second television signal distribution cable (19) and a fifth connection terminal (45), adapted to receive a third television signal distribution cable (20) while said printed circuit board (53) comprises a distributor-coupler of which a first input is connected to said first connection terminal (43), of which a second input is connected to said fifth connection terminal (45), of which a first output, for terrestrial television signals is connected to said first connector (50) and of which a second output, for all television signals, is connected to said fourth connection terminal (44).

13. The concentrator claimed in any one of claims 1 to 12, **characterized in that** it comprises a sixth connection terminal (46), adapted to receive a local area network cable (21), said printed circuit board connecting said sixth connection terminal (46) to said second terminal (48) and to said third connector (51).

14. The concentrator claimed in any one of claims 1 to 13, **characterized in that** it comprises a seventh connection terminal (47), adapted to receive a telephone network cable (21), said printed circuit board (53) connecting said second connection terminal (48) to said seventh connection terminal (47).

15. The concentrator claimed in any one of claims 1 to 14, **characterized in that** it comprises at least one connection terminal (44-47) other than said first connection terminal (43), said second connection terminal (48) or said third connection terminal (49A - 49H), said first connection terminal (43), said second connection terminal (48) and each said other connection terminal (44-47) being grouped in a line.

16. The concentrator claimed in any one of claims 1 to 15, **characterized in that** said printed circuit board (53) has a plurality of stacked layers (65-68) each comprising a dielectric substrate and conductive metal tracks or lands (76, 77) disposed on the substrate.

17. The concentrator claimed in claim 16, **characterized in that** said printed circuit board (53) has a first said layer (65) and a second said layer (68) for connecting said first connection terminal (43) to said first connector (50).

18. The concentrator claimed in claim 17, **characterized in that** said printed circuit board (53) comprises, for each said third terminal (49A - 49H), a converter (75) for converting an unbalanced signal into a balanced signal, each said converter (75) comprising an input connected to said first connector (50) by said first layer (65) and by said second layer (68), and comprising an output connected to said third connection terminal (49A - 49H) only via said second layer (68).

## Patentansprüche

1. Leitungskonzentrator mit:
- einer ersten Anschlussklemme (43), die ein Kabel (12) zur Verteilung von Fernsehsignalen aufzunehmen vermag;
- einer zweiten Anschlussklemme (48), die ein Telefonnetzkabel (13) aufzunehmen vermag;
- mehreren dritten Anschlussklemmen (49A-49H), die jeweils ein Kabel (49') des lokalen Netzwerks aufzunehmen vermögen;
**dadurch gekennzeichnet, dass** er umfasst:
- einen ersten Verbinder (50), der eine aktive elektronische Einheit (16) zur Verarbeitung von Fernsehsignalen aufzunehmen vermag;
- einen zweiten Verbinder (52), der eine aktive elektronische Fernsprecheinheit (18) aufzunehmen vermag;
- einen dritten Verbinder (51), der eine aktive elektronische Einheit (17) für das lokale Netzwerk aufzunehmen vermag;
- eine Leiterplatte (53), an der jede erste, zweite und dritte Anschlussklemme (43, 48, 49A-49H) und jeder erste, zweite und dritte Verbinder (50, 51, 52) angeschlossen ist, wobei die Leiterplatte (53) die erste Anschlussklemme (43) mit dem ersten Verbinder (50) verbindet, die zweite Anschlussklemme (48) mit dem zweiten Verbinder (52) verbindet und jede der dritten Anschlussklemmen (49A-49H) mit jedem ersten Verbinder (50), zweiten Verbinder (52) und dritten Verbinder (51) verbindet; und
- einen Rahmen (54), auf dem die Leiterplatte (53), jede erste, zweite und dritte Anschlussklemme (43, 48, 49A-49H) sowie jeder erste, zweite und dritte Verbinder (50, 51, 52) angebracht ist, wobei der Rahmen eine Aufnahme (56, 57, 58) für jede der aktiven elektronischen Einheit (18, 17, 18) aufweist.

2. Konzentrator nach Anspruch 1,
**dadurch gekennzeichnet, dass** die dritten Anschlussklemmen (49A-49H) in einer Gruppe entlang einer Linie angeordnet sind, während jeder erste Verbinder (50), zweite Verbinder (52) und dritte Verbinder (51) langgestreckt ist, wobei die dritten Anschlussklemmen (49A-49H), der erste Verbinder (50), der zweite Verbinder (52) und der dritte Verbinder (51) in aufeinanderfolgenden Reihen angeordnet sind.

3. Konzentrator nach Anspruch 2,
**dadurch gekennzeichnet, dass** der erste Verbinder (50) den dritten Anschlussklemmen (49A-49H) am nächsten liegt.

4. Konzentrator nach Anspruch 3,
**dadurch gekennzeichnet, dass** der zweite Verbinder (52) von den dritten Anschlussklemmen (49A-49H) am weitesten entfernt liegt, wobei der dritte Verbinder (51) zwischen dem ersten Verbinder (50) und dem zweiten Verbinder (52) angeordnet ist.

5. Konzentrator nach einem der Ansprüche 2 bis 4,
**dadurch gekennzeichnet, dass** die erste Anschlussklemme (43) und die zweite Anschlussklemme (48) in einer Gruppe entlang einer Linie angeordnet sind, wobei die dritten Anschlussklemmen (49A-49H), der erste Verbinder (50), der zweite Verbinder (52), der dritte Verbinder (51) und die Gruppe aus erster Anschlussklemme (43) und zweiter Anschlussklemme (48) in aufeinanderfolgenden Reihen angeordnet sind.

6. Konzentrator nach einem der Ansprüche 1 bis 5,
**dadurch gekennzeichnet, dass**:
- die erste Anschlussklemme (43) und die zweite Anschlussklemme (48) an einem ersten Ende des Konzentrators (42) angeordnet sind;
- die dritten Anschlussklemmen (49A-49H) an einem zweiten Ende des Konzentrators (42) angeordnet sind; und
- der erste Verbinder (50), der zweite Verbinder (52) und der dritte Verbinder (51) zwischen dem ersten Ende und dem zweiten Ende angeordnet sind, wobei der erste Verbinder (50) dem zweiten Ende am nächsten liegt.

7. Konzentrator nach Anspruch 6,
**dadurch gekennzeichnet, dass** der zweite Verbinder (52) dem ersten Ende am nächsten liegt, während der dritte Verbinder (51) zwischen dem ersten Verbinder (50) und dem zweiten Verbinder (52) angeordnet ist.

8. Konzentrator nach einem der Ansprüche 1 bis 7,
**dadurch gekennzeichnet, dass** er eine vierte Anschlussklemme (44) aufweist, die ein zweites Kabel (19) zur Verteilung von Fernsehsignalen aufzunehmen vermag.

9. Konzentrator nach Anspruch 8,
**dadurch gekennzeichnet, dass** die Leiterplatte (53) einen Verteiler aufweist, dessen einer Eingang mit der ersten Anschlussklemme (43) verbunden ist, dessen erster Ausgang für terrestrische Fernsehsignale mit dem ersten Verbinder (50) verbunden ist und dessen zweiter Ausgang für sämtliche Fernsehsignale mit dem vierten Verbinder (44) verbunden ist.

10. Konzentrator nach einem der Ansprüche 1 bis 9,
**dadurch gekennzeichnet, dass** er eine fünfte Anschlussklemme (45) aufweist, die ein drittes Kabel (20) zur Verteilung von Fernsehsignalen aufzunehmen vermag.

11. Konzentrator nach Anspruch 10,
**dadurch gekennzeichnet, dass** die Leiterplatte (53) einen Koppler aufweist, dessen erster Eingang mit der ersten Anschlussklemme (43) verbunden ist, dessen zweiter Eingang mit der fünften Anschlussklemme (45) verbunden ist und dessen einer Ausgang mit dem Verbinder (50) verbunden ist.

12. Konzentrator nach einem der Ansprüche 1 bis 11,
**dadurch gekennzeichnet, dass** er eine vierte Anschlussklemme (44), die ein zweites Kabel (19) zur Verteilung von Fernsehsignalen aufzunehmen vermag, und eine fünfte Anschlussklemme (45) aufweist, die ein drittes Kabel (20) zur Verteilung von Fernsehsignalen aufzunehmen vermag, während die Leiterplatte (53) einen Verteiler und Koppler aufweist, dessen erster Eingang mit der ersten Anschlussklemme (43) verbunden ist, dessen zweiter Eingang mit der fünften Anschlussklemme (45) verbunden ist, dessen erster Ausgang für terrestrische Fernsehsignale mit dem ersten Verbinder (50) verbunden ist und dessen zweiter Ausgang für sämtliche Fernsehsignale mit der vierten Anschlussklemme (44) verbunden ist.

13. Konzentrator nach einem der Ansprüche 1 bis 12,
**dadurch gekennzeichnet, dass** er eine sechste Anschlussklemme (46) aufweist, die ein Kabel (21) des lokalen Netzwerkes aufzunehmen vermag, wobei die Leiterplatte die sechste Anschlussklemme (46) mit der zweiten Klemme (48) und dem dritten Verbinder (51) verbindet.

14. Konzentrator nach einem der Ansprüche 1 bis 13,
**dadurch gekennzeichnet, dass** er eine siebte Anschlussklemme (47) aufweist, die ein Kabel (21) des Fernsprechnetzes aufzunehmen vermag, wobei die Leiterplatte (53) die zweite Anschlussklemme (48) mit der siebten Anschlussklemme (47) verbindet.

15. Konzentrator nach einem der Ansprüche 1 bis 14,
**dadurch gekennzeichnet, dass** er wenigstens eine andere Anschlussklemme (44-47) als die erste Anschlussklemme (43), als die zweite Anschlussklemme (48) und als die dritte Anschlussklemme (49A-49H) aufweist, wobei die erste Anschlussklemme (43), die zweite Anschlussklemme (48) und jede der anderen Anschlussklemmen (44-47) in einer Gruppe entlang einer Linie angeordnet sind.

16. Konzentrator nach einem der Ansprüche 1 bis 15,
**dadurch gekennzeichnet, dass** die Leiterplatte (53) mehrere übereinanderliegende Schichten (65-68) aufweist, die jeweils ein dielektrisches Substrat und auf dem Substrat angeordnete Leiterbahnen oder Blöcke (76, 77) aus leitendem Metallwerkstoff aufweisen.

17. Konzentrator nach Anspruch 16,
**dadurch gekennzeichnet, dass** die Leiterplatte (53) eine erste Schicht (65) und eine zweite Schicht (68) zum Verbinden der ersten Anschlussklemme (43) mit dem ersten Verbinder (50) aufweist.

18. Konzentrator nach Anspruch 17,
**dadurch gekennzeichnet, dass** die Leiterplatte (53) für jede der dritten Anschlussklemmen (49A-49H) einen Wandler (75) eines asymmetrischen Signals in ein symmetrisches Signal aufweist, wobei jeder Wandler (75) einen mit dem ersten Verbinder (50) verbundenen Eingang sowohl für die erste Schicht (65) als die zweite Schicht (68) aufweist und einen mit der dritten Anschlussklemme (49A-49H) verbundenen Ausgang einzig über die zweite Schicht (68) aufweist.
